# EUROPEAN PATENT APPLICATION

(11) **EP 2 476 348 A1**
(43) Date of publication of application: **18.07.2012**
(21) Application number: 11380082.5
(22) Date of filing: 17.10.2011
(51) Int. Cl.: A47D 13/02, B60N 2/28

(54) **Body for carrycots and similar**

(30) Priority: 18.01.2011 ES 201130035 U
(71) Applicant: JANE, S.A., 08184 Palau Solità i Plegamans Barcelona (ES)
(72) Inventor: Jane Santamaria, Manuel, 08184 Palau Solita I Plegamans (Barcelona) (ES)
(74) Representative: Morgades y Manonelles, Juan Antonio

(57) **Abstract**

The purpose of this invention is a body for carrycots (1) and similar that is very simple and of reduced weight, the manufacture of which does not require any additional assembly, with everything necessary integrated into the part forming the body. For this reason, the carrycot body (1) consists of two similar superposed receptacles (2,3) that are joined together by the peripheries of their mouths (4,5), with the upper receptacle (2), which forms the interior part of the indicated body (1), being made of a lightweight material and the lower receptacle (3), which forms the exterior part of the body (1), is made of a strong material.

## Description

### BACKGROUND TO THE INVENTION

Nowadays, the bodies of carrycots and similar consist of a receptacle, generally manufactured by plastic material injection, inside of which the parts forming the interior walls are fixed, the bottom and the details forming the body interior, which represents a costly manufacturing process for separately obtaining the various parts and the fixing operations for the interior parts in the receptacle.

### INVENTION SUMMARY

The purpose of this invention is a body for carrycots and similar that is very simple and of reduced weight, the manufacture of which does not require any additional assembly, with everything necessary integrated into the part forming the body.

For this reason, the carrycot body consists of two similar superposed receptacles that are joined together by the peripheries of their mouths, with the upper receptacle, which forms the interior part of the indicated body, being made of a lightweight material and the lower receptacle, which forms the exterior part of the body, is made of a strong material.

The upper receptacle shall be preferably made of a foam material, such as "Porexpan" and the lower receptacle of resin, such a polycarbonate or fibre glass.

This carrycot body presents optimum protection against a collision, by absorbing the energy, excellent strength, because of the volumetric manufacture and is compact with good stability.

These and other characteristics can be better understood from the following detailed description, which is facilitated by a sheet of drawings that represent a practical embodiment that is cited only as a non-limiting example of the scope of this invention.

### DESCRIPTION OF THE DRAWINGS

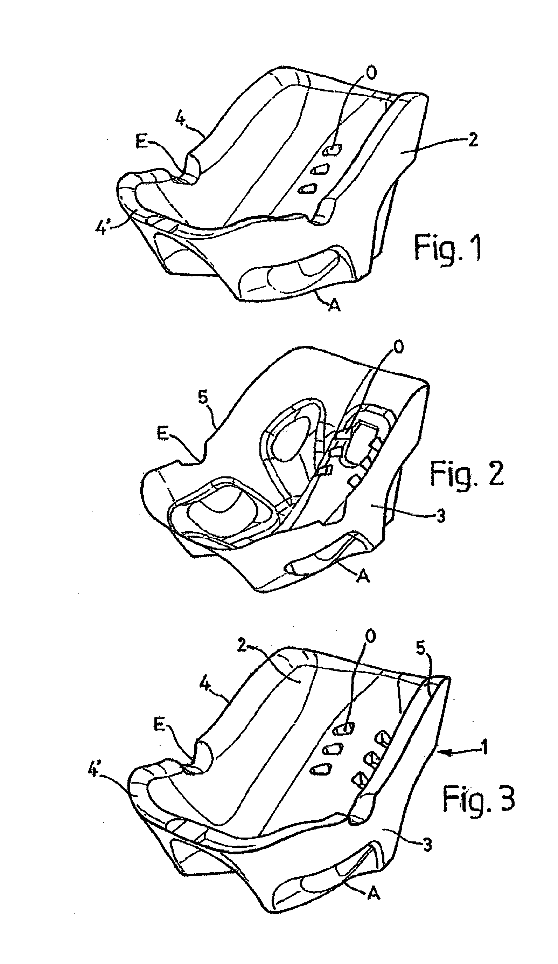

Figure 1 illustrates a perspective view of the upper receptacle that will form the interior part of a carrycot body.
Figure 2 shows a perspective view of the lower receptacle that will form the exterior part of a carrycot body.
Figure 3 is a perspective view of the carrycot covered by this invention.

### DETAILED DESCRIPTION

In accordance with the drawings, the carrycot body (1) comprises two receptacles (2 and 3) of similar constitution that are superposed and joined together by the peripheries of their mouths (4 and 5), with the upper receptacle (2), which forms the interior part of body (1), being made of a lightweight material, such as a foam material like extruded "Porexpan".

The lower receptacle (3), which forms the exterior part of body (1), is made of a strong material, such as injected resin with fibre glass.

For the union between the two receptacles, the edge of upper receptacle (2) mouth (4) has a tab (4') on its edge that is applied to the edge of mouth (5) of the lower receptacle (3).

This union can be made by any conventional method, for example, gluing, welding, screwing or also be insertion of a receptacle, for example, the upper (2) into the mould during the manufacture of the other receptacle, the lower (3).

In accordance with the constitution that is required for the carrycot, the two receptacles, with generally similar constitution, present significant structure and design details, such as orifices (0) in the backrest area for passing the child-restraining straps in the carrycot, the lower supports (A) and the lateral entries (E) for passing the safety belt for securing the carrycot to a car-seat.

The obtained carrycot body is completed with conventional accessories, such as the headrest, upholstery and the inclusion of a transport handle and it shall present the necessary means for coupling to a platform fitted with "Isofix" anchoring means for securing the carrycot to a car-seat.

It is understood that the characteristics of this carrycot can be equally applied to similar products, such as cots and children's seats.

The essence of the invention can be put into practice in other embodiment forms that only differ in details from that indicated only as an example, which similarly attain the claimed protection. Thus, this body for carrycots and similar may be manufactured in any size and shape, using the most suitable means and materials and the most adequate accessories, with the component elements being replaced by other technically equivalent ones, because everything is within the spirit of the claims.

## Claims

1. Body for carrycots and similar, **characterised in that** it comprises two receptacles of similar constitution that are superposed and joined together by the peripheries of their mouths, with the upper receptacle, which forms the interior part of body, being made of a lightweight material and the lower receptacle, which forms the exterior part of body, being made of a strong material.

2. Body for carrycots and similar, in accordance with claim 1, **characterised in that** the upper receptacle mouth has a tab on its edge that is applied to the edge of mouth of the lower receptacle in the union between the two receptacles.
